# EUROPÄISCHE PATENTSCHRIFT

(11) **EP 2 164 658 B1**
(45) Veröffentlichungstag und Bekanntmachung des Hinweises auf die Patenterteilung: **11.12.2019**
(21) Anmeldenummer: 08784270.4
(22) Anmeldetag: 01.07.2008
(51) Int. Cl.: B22F 3/105, B29C 64/40, B33Y 40/00, B29C 64/379, B22F 3/14

(54) **VERFAHREN ZUM HERSTELLEN DREIDIMENSIONALER BAUTEILE**
METHOD FOR THE PRODUCTION OF THREE-DIMENSIONAL PARTS
PROCÉDÉ DE RÉALISATION DE COMPOSANTS TRIDIMENSIONNELS

(30) Priorität: 18.07.2007 DE 102007033434
(43) Veröffentlichungstag der Anmeldung: 24.03.2010
(73) Patentinhaber: Voxeljet AG, 86316 Friedberg (DE)
(72) Erfinder: EDERER, Ingo, 82269 Geltendorf (DE)
(74) Vertreter: Helbig, Christian
(86) Internationale Anmeldenummer: PCT/DE2008/001073
(87) Internationale Veröffentlichungsnummer: WO 2009/010034

(56) Entgegenhaltungen:
- EP-A- 1 486 318
- US-A- 5 216 616
- US-A- 5 263 130
- US-A1- 2004 187 714
- US-A1- 2007 126 157

## Beschreibung

Die vorliegende Erfindung bezieht sich auf ein Verfahren zum Herstellen dreidimensionaler Bauteile mittels eines dreidimensionalen Druckverfahrens.

Verfahren zur Herstellung dreidimensionaler Bauteile sind schon seit längerer Zeit bekannt.

Beispielsweise wird in der europäischen Patentschrift EP 0 431 924 B1 ein Verfahren zur Herstellung dreidimensionaler Objekte aus Computerdaten beschrieben. Dabei wird ein Partikelmaterial in einer dünnen Schicht auf eine Plattform aufgetragen und dieses selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wir die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt.

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann vom Restpulver z.B. durch Abbürsten befreit werden.

In ähnlicher Weise arbeiten auch andere Pulver-gestützte Rapid-Prototyping-Prozesse, wie z.B. das selektive Lasersintern oder das Elektron-Beam-Sintern bei denen jeweils ebenso ein loses Partikelmaterial schichtweise ausgebracht und mit Hilfe einer gesteuerten physikalischen Strahlungsquelle selektiv verfestigt wird.

Im Folgenden werden alle diese Verfahren unter dem Begriff "dreidimensionale Druckverfahren" oder 3D-Druckverfahren zusammengefasst.

Bei allen diesen dreidimensionalen Druckverfahren stützt das lose, nicht verfestigte Partikelmaterial den Baukörper während und nach dem Aufbau des Baukörpers. Zusätzliche Supportstrukturen, wie sie z.B. bei einem anderen Schichtbauverfahren, dem so genannten stereolithographischen Verfahren notwendig sind, werden aber bei den 3D-Druckverfahren üblicherweise nicht benötigt.

Bislang wird diese Eigenschaft als großer Vorteil der 3D-Druckverfahren geschätzt, da keine manuelle Nachbearbeitung der Bauteile notwendig ist, um etwaige Stützstrukturen zu entfernen.

Dokument US 2007/0126157 A1 offenbart Verfahren und Vorrichtungen um Bauteile aus einem Pulver-gestützte Rapid-Prototyping System zu entfernen

Wird beispielsweise jedoch das Pulver-gestützte Rapid-Prototyping-Verfahren verwendet, um eine größere Stückzahl von Gegenständen herzustellen, ergeben sich unter Umständen verschiedene Probleme.

Üblicherweise sind die Teile nach ihrer Fertigstellung vollständig von losem Partikelmaterial umgeben und damit für den Bediener zunächst nicht sichtbar. Verwendet der Bediener einen Sauger, um das lose Partikelmaterial zu entfernen, besteht die Gefahr der Beschädigung der hergestellten Objekte durch die Saugdüse. Insbesondere bei kleineren Teilen besteht auch die Gefahr, dass die Teile ungewollt mit in die Saugdüse gelangen können.

Größere filigrane Strukturen können nach ihrer Herstellung bei der Entnahme aus dem Pulverbett beschädigt werden, wenn sich Teile des Objektes noch im Pulverbett befinden und sich etwas schwerer lösen lassen.

Daneben kann es auch vorkommen, dass Bauteile durch unvorsichtiges Entfernen des losen Partikelmaterials unter dem Bauteil den Halt verlieren und abrutschen oder unter ihrem Eigengewicht zusammenbrechen.

Aus all diesen Gründen ist es bisher auch nicht möglich das Entnehmen der Bauteile aus dem Pulverbett zu automatisieren.

Es ist nun eine Aufgabe der vorliegenden Erfindung ein Verfahren bereitzustellen, mit dem es möglich ist, beliebige 3D-gedruckte Objekte einfach und sicher aus dem losen Partikelmaterial zu entnehmen.

Erfindungsgemäß wird diese Aufgabe durch ein Verfahren nach Anspruch 1 zum Herstellen dreidimensionaler Bauteile mittels eines dreidimensionalen Druckverfahrens gelöst, wobei bei einem Aufbau von Bauteilen über eine Erstreckung des oder der Bauteile hinaus zusätzlich eine Hilfsstruktur mitgebildet wird.

Ferner wird die Aufgabe durch ein erfindungsgemäße System nach Anspruch 5 gelöst, wobei eine Hilfsstruktur mit einem Bauteil aufgebaut wird und sich über eine Dimension des oder der Bauteile hinaus erstreckt.

Durch den Mitaufbau einer solchen Hilfsstruktur ist eine weitere Handhabung der unter Umständen kleinen und filigran aufgebauten Bauteile sehr viel leichter möglich.

Gemäß einer bevorzugten Ausführungsform des erfindungsgemäßen Verfahrens wird die Hilfsstruktur derart mit aufgebaut, dass mindestens zwei gleichzeitig aufgebaute Bauteile direkt oder indirekt durch die Hilfsstruktur miteinander verbunden sind.

Bei einer solchen Ausgestaltung der vorliegenden Erfindung ist die Handhabung der hergestellten Bauteile unter Umständen noch einfacher, da mehrere Bauteile gleichzeitig entnommen werden können. Dies kann insbesondere dann von Vorteil sein, wenn die Bauteile relativ klein sind.

Vorteilhafterweise kann bei einem erfindungsgemäßen Verfahren die Hilfsstruktur Materialien des Bauteils aufweisen.

Eine solche Ausgestaltung des erfindungsgemäßen Verfahrens macht den Aufbau der Hilfsstruktur einfach und erfordert auch nur einen überschaubaren zeitlichen Mehraufwand für den Aufbau der Hilfsstruktur.

Gemäß einer besonders bevorzugten Ausführungsform des vorliegenden Verfahrens wird die Hilfsstruktur im Wesentlichen aus dem gleichen Material wie das oder die Bauteile gebildet. Dies macht den "Mitaufbau" der Hilfsstruktur unter Umständen ganz besonders einfach.

Gemäß dem erfindungsgemäßen Verfahren werden mehrere Lagen von Bauteilen übereinander gebildet. Das bedeutet, dass in einem Aufbauprozess mehrere Bauteile nicht nur nebeneinander, sondern auch Übereinander gebildet werden.

In jeder Lage von Bauteilen wird eine eigene, alle Bauteile einer Lage umfassende Hilfsstruktur gebildet.

Mit dem Verfahren, wie es gemäß der Offenbarung beschrieben wird, kann das Bauteil und die Hilfsstruktur mittels schichtweise aufgetragenen Partikelmaterials und unter Zugabe eines weiteren Materials oder über selektiven Energieeintrag gebildet werden.

Vorzugsweise wird bei dem Verfahren die Hilfsstruktur mit mindestens einem Bauteil verbunden gebildet. Es ist daher auch denkbar, dass es bei manchen Ausgestaltungen vorteilhaft ist, wenn alle Bauteile eines Herstellungsprozesses miteinander verbunden sind.

Ferner kann es auch vorteilhaft sein, wenn bei dem Verfahren nach der Offenbarung an Verbindungsstellen zwischen Bauteil und Hilfsstruktur Sollbruchstellen gebildet werden.

Es hat sich gemäß einer Ausführungsform der Erfindung auch als hilfreich erwiesen, wenn die Hilfsstruktur weiterhin eine Aufnahme bzw. eine Ankoppelvorrichtung bildet, da dann die Handhabung der gebildeten Bauteile besonders einfach wird. Eine solche Aufnahmevorrichtung könnte dabei eine Aufnahme für ein Handlingswerkzeug darstellen.

Ein weiterer Fortschritt, der mit einer Hilfsstruktur gemäß der vorliegenden Erfindung erzielt werden kann ist, dass durch die Hilfsstruktur eine automatisierte Handhabung von Bauteilen möglich sein kann.

Damit eine Handhabung der Bauteile besonders einfach ist, verbindet die Hilfsstruktur gemäß einer Ausführungsform mindestens zwei Bauteile einer Bauteillage.

Es kann sich auch als besonders vorteilhaft erweisen, wenn die Hilfsstruktur alle aufgebauten Bauteile miteinander verbindet. So ist ein entnehmen der Bauteile nach ihrer Fertigstellung besonders einfach und in nur einem Arbeitsgang möglich.

Gemäß einer Ausführungsform der Offenbarung kann es sich anbieten, die Hilfsstruktur stets an einer Seite des Bauzylinders zu orientieren, um hier einen einheitlichen Ansatzpunkt für eventuelle Entnahmevorrichtungen zu haben und dann die gewünschten Bauteile an dieser Seite platzsparend zu gruppieren. Der Rest der Hilfsstruktur könnte dann aus den bekannten Bauzeitüberlegungen möglichst konturnah an den Bauteilen folgen.

Dabei könnte es sein, dass die Hilfsstruktur direkt mit dem oder den Bauteilen verbunden ist.

Eine weitere Möglichkeit wäre, dass die Hilfsstruktur indirekt mit dem oder den Bauteilen verbunden ist, denn notwendigerweise muss die Hilfsstruktur das Bauteil nicht unbedingt materialschlüssig anbinden. Die Hilfsstruktur hält das Bauteil formschlüssig, so dass kleine Bewegungen des Bauteils zugelassen werden.

Die Hilfsstruktur könnte darüber hinaus auch als eine Art Gitterbox um das Bauteil ausgeführt werden, die nur über dünne Stege zum Abtrennen der Raumsegmente verfügt.

Die Ermittlung der geeigneten Hilfsstruktur soll gemäß einer besonders bevorzugten Ausführungsform möglichst automatisiert in einer den Prozess vorbereitenden Software erfolgen.

Eine mögliche Arbeitsabfolge wäre beispielsweise die Platzierung der zu bauenden Teile im virtuellen Bauraum mittels eines Rechenprogramms. Daran schließt sich an, dass an den Bauteilen die Positionen für die Anbindung der Hilfsstruktur vom Bediener markiert werden. Anschließend errechnet die Prozesssoftware die optimierte Hilfsstruktur und dimensioniert diese auch anhand der vorliegenden Daten zu Bauteilvolumen und damit Gewicht.

Daran anschließend wird der gesamte Bauraum einschließlich der Hilfsstruktur in die gewünschten Schichten zerlegt und diese Daten dann dem Schichtbauprozess übergeben, damit Bauteil sowie Hilfsstruktur mittels des gewünschten 3D-Druckverfahrens aufgebaut werden können.

Die Hilfsstruktur kann zudem dazu verwendet werden, eine Bauteilidentifikation zu erleichtern, indem z.B. Bauteilnummern oder Bauteilcodes an den Stegen zu den entsprechenden Bauteilen angebracht sind. Diese Codes könnten beispielsweise in maschinenlesbarer Form vorliegen, um sie einer automatisierten Auswertung zuführen zu können.

Gemäß einer bevorzugten Ausführungsform wird ein Verfahren zum Herstellen von dreidimensionalen Bauteilen aus einem partikelförmigen Grundwerkstoff bereitgestellt. Der Grundwerkstoff wird schichtweise aufgetragen und anschließend über die Zugabe eines weiteren Materials oder über Energieeintrag selektiv entlang einer von einer Steuerung vorgegebenen Kontur des Bauteils verbunden. Durch mehrmaliges Wiederholen dieses Vorganges wird das Bauteil fertig gestellt. Mit dem Bauteil wird vorliegend vorzugsweise eine Hilfsstruktur mitgebaut, die das oder die aufzubauenden Bauteile auch ohne die stützende Wirkung des umliegenden Pulvermaterials in der gewünschten Lage im Bauraum hält.

Weißt die Hilfsstruktur gemäß einer besonders bevorzugten Ausführungsform der vorliegenden Erfindung eine andere Farbe als das Bauteil auf, ist zum Einen die Handhabung der Bauteile gegebenenfalls besonders einfach, da sehr leicht auch von einer Maschine erkannt wird, was die Hilfsstruktur darstellt und wo gegebenenfalls ein Angreifen der gebildeten Struktur erfolgen sollte.

Zur näheren Erläuterung wird die Erfindung anhand bevorzugter Ausführungsbeispiele nachfolgend unter Bezugnahme auf die Zeichnung näher beschrieben.

In der Zeichnung zeigt dabei:
Figur 1 eine als Rahmen ausgebildete Hilfsstruktur gemäß einer ersten bevorzugten Ausführungsform der vorliegenden Erfindung.
Figur 2 zeigt eine mögliche Anbindungsform einer Hilfsstruktur an die Bauteile.
Figur 3 zeigt eine Anordnung mehrerer Bauteile in einem Bauzylinder.
Figur 4 zeigt ein automatisiertes Entnehmen der mit Hilfsstrukturen versehenen Bauteile.

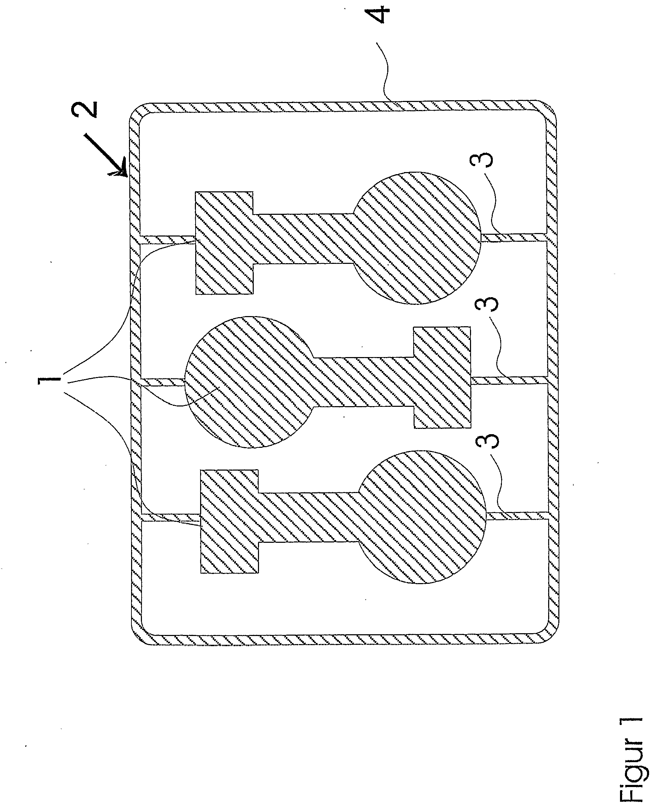

Die Figur 1 zeigt in Draufsicht eine Verbindung mehrerer Bauteile 1 mit einer Hilfsstruktur 2, wobei die Hilfsstruktur 2 einen die Bauteile 1 umgebenden Rahmen 4 aufweist. Die Bauteile 1 sind mit dem Rahmen 4 über Stege 3 verbunden.

Die Hilfsstruktur 2 besteht gemäß der in Figur 1 gezeigten Ausführungsform der Erfindung aus dem Rahmen 4, der sich um die Bauteile 1 einer Ebene legt und durch Stege 3 mit den einzelnen Bauteilen verbunden ist. Der Rahmen 4 ist dabei so dimensioniert, dass alle an ihn angebundenen Bauteile 1 mit ihrem Eigengewicht an diesem Rahmen 4 halten, ohne ihn dadurch zu beschädigen.

Um die verbrauchte Pulvermenge zu begrenzen, besteht die Möglichkeit die Hilfsstruktur 2 zumindest teilweise nicht massiv auszubilden. So wäre es beispielsweise möglich den Rahmen 4 zumindest teilweise aus Hohl- oder offenen Profilen zu fertigen, deren Innenraum gegebenenfalls über entsprechende Öffnungen für Reinigungsmittel zugänglich ist.

Der Rahmen 4 kann beispielsweise einen rechteckigen Querschnitt aufweisen, jedoch sind ohne weitere Einschränkung andere, wie beispielsweise auch runde bzw. ovale Querschnitte denkbar.

Um die Bauzeit für die Hilfsstruktur 2 zu reduzieren, kann es vorteilhaft sein, wenn die Hilfsstruktur 2 möglichst nah um die Bauteile 1 geführt wird und so eine möglichst geringe Dimension aufweist.

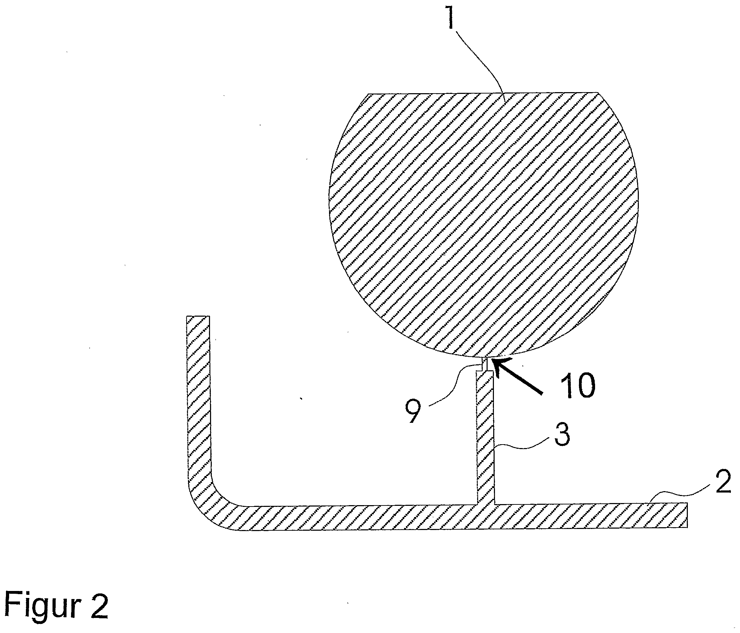

In der Figur 2 ist eine mögliche Anbindungsform einer Hilfsstruktur 2 an ein Bauteil 1 dargestellt.

Um die Nacharbeit, die zum Entfernen der Stege 3 beziehungsweise der Kontaktpunkte der Stege 3 am Bauteil 1 zu begrenzen, kann es vorteilhaft sein, die Hilfsstruktur 2 mit möglichst wenigen Anbindungspunkten 10 zu den Bauteilen 1 zu versehen.

Die Stege 3 mit ihren Anbindungspunkten 10 können zur besseren Entfernbarkeit mit so genannten Sollbruchstellen 9 ausgeführt sein, die, wie beispielhaft in Figur 2 gezeigt, mit einer geometrisch definierten Einschnürung 9 versehen sind.

Daneben oder zusätzlich wäre es auch möglich durch eine verringerte Festigkeit, beispielsweise aufgrund verringerten Bindereintrags, die Sollbruchstelle 9 herzustellen.

Ferner befinden sich die Anbindungspunkte 10 vorzugsweise an Stellen der Bauteile 1, die nicht eine exakte Oberfläche erfordern. So ist es nicht wünschenswert, dass durch einen ungünstig platzierten Anbindungspunkt die optische Anmutung verschlechtert wird.

Bevorzugte Stellen für Anbindungspunkte 10 können beispielsweise rückwärtige oder innen liegende Flächen des Bauteiles 1 sein. Jedoch sollte bei der Auswahl der Anbindungspunkte 10 auch berücksichtigt werden, dass die Zugänglichkeit gewährleistet ist und sich die Anknüpfungen rückstandsfrei entfernen lassen. Aus diesem Grund sind unter Umständen nach außen gewölbte Flächen besser geeignet, da diese besser zugänglich sind als nach innen gewölbte Flächen.

Die Anzahl der Anbindungspunkte 10 sollte vorzugsweise auch so gewählt sein, dass sie ausreicht, um das entsprechend angebundene Bauteil 1 in jeder Lage unter seinem Eigengewicht und eventuell auch unter dem Einfluss geringerer oder stärkerer zusätzlicher Kräfte infolge einer Nacharbeit sicher zu halten.

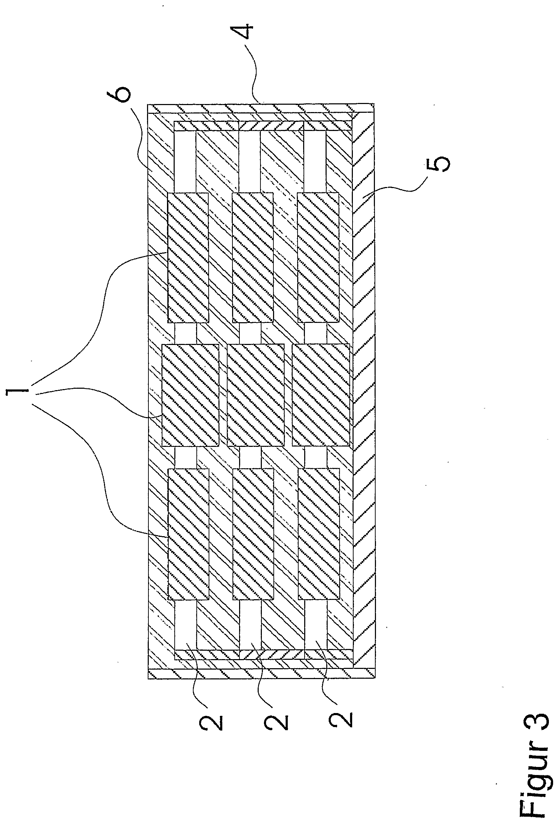

Figur 3 zeigt eine Anordnung mehrerer Bauteile 1 in einem Bauzylinder 4 nach dem Aufbau der Bauteile 1.

Im 3D-Druck, aber auch in anderen RP-Verfahren ist je nach Bauteilgröße und Bauteilform die Herstellung von Bauteilen in mehreren Lagen übereinander möglich. Der Zugang zu den einzelnen Lagen erfolgt dabei in der Regel nur von einer Seite und zwar üblicherweise von der Eintragsseite des Partikelmaterials aus.

Um an die unten liegenden Bauteile zu gelangen, müssen zunächst die oberen Bauteile entfernt werden.

Daher kann, wie dies in Figur 3 dargestellt ist, die Unterteilung der Bauteile 1 und der zugehörigen Hilfsstrukturen 2 in verschiedene Ebenen, die gegebenenfalls parallel zur Schichtbauebene verlaufen, vorteilhaft sein. So kann nämlich eine leichte und sukzessive Entnahme der einzelnen "Bauteilebenen" erfolgen.

Die Hilfsstrukturen 2 der einzelnen Ebenen sollen hierbei vorzugsweise leicht voneinander zu lösen sein und dennoch eine Lagefixierung auch ohne stützendes Pulvermaterial ermöglichen.

Je nach Bauteilgröße und Bauteilgewicht wäre es aber ebenso denkbar, dass auch die Bauteile aus verschiedenen Bauebenen durch die Hilfsstruktur miteinander verbunden sind.

Unter Umständen kann es auch vorteilhaft sein, wenn die Hilfsstruktur die Bauteile nicht in zur Schichtbaurichtung parallelen Richtung, sondern zusätzlich oder auch ausschließlich in zur Schichtbaurichtung senkrechter Richtung miteinander verbindet.

Die Anbindung der Bauteile an eine Hilfsstruktur ermöglicht den Einsatz automatisierter Entnahme und Reinigungsmethoden. Dies wird momentan dadurch erschwert, dass die Bauteile in der Regel individuell gestaltet sind und keine Aufnahmemöglichkeit z.B. für Roboter-Greifer aufweisen. Die Verwendung einfacher Greifmechanismen würde schnell zur Bauteilbeschädigung führen.

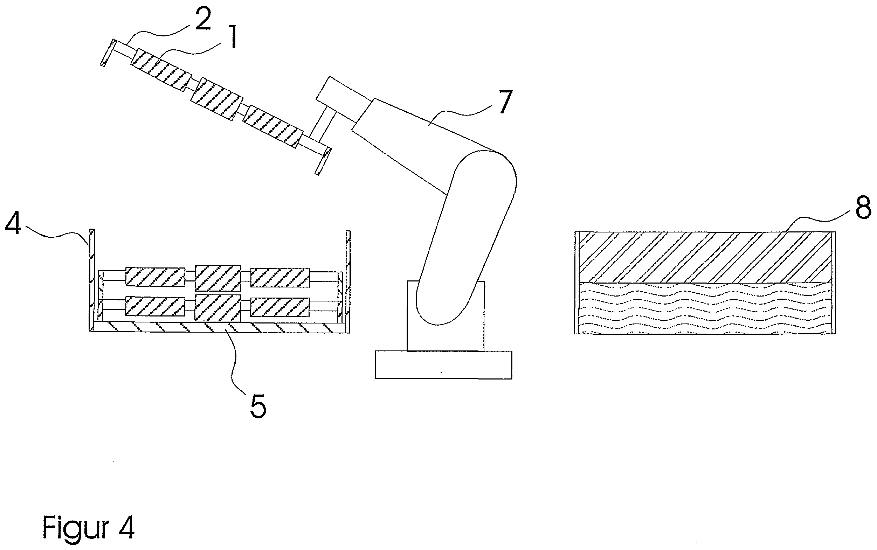

Figur 4 zeigt ein automatisiertes Entnehmen der mit Hilfsstrukturen 2 versehenen Bauteile 1, das durch die Verwendung der Hilfsstrukturen möglich wird.

Durch die Verwendung der Hilfsstruktur 2 kann nun gemäß einer Ausführungsform der vorliegenden Erfindung eine einheitliche Aufnahmemöglichkeit für eine automatisierte Entnahme bzw. Reinigung bzw. Nachbearbeitung definiert werden.

Ein Roboter 7 könnte beispielsweise eine mit einem Rahmen versehene Hilfsstruktur 2 mit Bauteilen 1 nacheinander entnehmen und einer Nacharbeitung, wie beispielsweise einer Reinigung zuführen.

Auch die Entfernung des losen Partikelmaterials 6 kann einfacher erfolgen, indem z.B. zumindest ein Teil des Bodens 5 des Gefäßes, in dem der Schichtbauprozess stattgefunden hat, entfernt wird oder der Boden verschließbare Öffnungen aufweist, die nach dem Ende des Prozesses geöffnet werden und das lose Partikelmaterial bei entsprechender Fließfähigkeit durch die Bodenöffnungen ausströmt.

Die Bauteile 1 werden bei dieser Technik durch die Hilfsstruktur 2 in der vorbestimmten Lage gehalten und nicht mit dem ab- oder wegströmenden Partikelmaterial 6 mitgerissen.

Das Entfernen des losen Partikelmaterials 6 könnte aber auch über die obere Öffnung des Baubehälters erfolgen, indem zum Beispiel der gesamte Baubehälter gekippt wird, um das lose Partikelmaterial 6 auszuschütten. Wird dabei die Hilfsstruktur 2 beispielsweise durch Klammern am Bauzylinder festgehalten, bleiben die Bauteile 1 mit der Hilfsstruktur 2 in der vordefinierten Lage und werden durch diesen Vorgang nicht beeinträchtigt und damit auch nicht beschädigt.

Weiterhin könnte das lose Partikelmaterial 6, wie es aus dem Stand der Technik bekannt ist, auch abgesaugt werden. Dabei kann eine Sauglanze von Oben über die Pulverschüttung geführt werden oder aber sie wird direkt in die Pulverschüttung gesteckt und das lose Partikelmaterial strömt dann der Saugdüse zu. In beiden Fällen, bleiben die Bauteile 1 aufgrund der Hilfsstruktur 2 in einer gewünschten Lage und werden daher nicht versehentlich mit abgesaugt oder beschädigt.

Nachdem ein Großteil des losen Partikelmaterials 6 entfernt ist, können die Bauteile 1 mit der Hilfsstruktur 2 aus dem Baubehälter entfernt werden und einer weiteren Reinigung zugeführt werden. Diese kann beispielsweise mit Druckluft oder Druckluft versetzt mit Strahlmitteln erfolgen. Die Hilfsstruktur 2 erlaubt hier wieder, dass die Bauteile 1 in einer gewünschten Lage verbleiben und die Reinigungsmittel über die Bauteile 1 geführt werden. Dieser Vorgang kann manuell oder automatisiert erfolgen. Denkbar wäre zum Beispiel der Einsatz eines Reinigungsautomaten, in den mehrere standardisierte Hilfsstrukturrahmen 4 mit Bauteilen 1 eingebracht werden und durch den die Bauteile 1 in einem geschlossenen Prozessraum mit einem fluiden Medium, wie beispielsweise Druckluft von dem noch verbliebenen restlichen Partikelmaterial 6 gereinigt werden können.

Das vom Bauteil 1 getrennte Partikelmaterial 6 kann dann über eine Prozessraumabsaugung einem Abscheider zugeführt werden und wieder dem Bauprozess zugeführt werden.

Die notwendigen starken Strömungen in einem derartigen Reinigungsautomaten erfordern eine ausreichende Fixierung der Bauteile 1, die durch die Hilfsstruktur 2 erfolgen kann.

Nach der Reinigung kann es erforderlich sein, dass die Bauteile 1 infiltriert werden müssen, um bestimmte Werkstoffeigenschaften zu erzielen. Dies kann über das Eintauchen der Bauteile in ein mit flüssigem Infiltrationsmedium 8 gefülltem Becken geschehen.

Über die Hilfsstruktur 2 kann auch dieser Vorgang wesentlich erleichtert werden, da mehrere Bauteile 1 auf einmal einfach gehalten und damit gefahrlos auch auf einmal getaucht werden können. Auch in diesem Fall lässt sich der Vorgang leicht automatisieren, indem ein oder mehrere Rahmen beispielsweise in eine Gitterbox eingebracht und dann mit der Gitterbox in das Infiltrationsbecken 8 getaucht werden, wie dies beispielsweise der Figur 4 entnommen werden kann. Selbstverständlich ist auch ein Tauchen einzelner "Bauteilschichten" automatisiert denkbar.

Zuletzt müssen die Bauteile 1 von der Hilfsstruktur 2 wieder getrennt werden.

Hilfreich ist dabei eine farbliche Unterscheidung der Hilfsstruktur vom Bauteil, die z.B. durch zusätzlichen Farbeintrag beim 3D-Druckprozess erfolgen kann oder durch eine veränderte chemische Reaktion bei Über- oder Unterhärtung. Auch ist eine Unterscheidung durch eine bestimmte Oberflächenstruktur denkbar, die ausschließlich in der Hilfsstruktur verwendet wird.

## Patentansprüche

1. Verfahren zum Herstellen dreidimensionaler Bauteile (1) mittels eines dreidimensionalen Druckverfahrens, wobei bei einem Aufbau von Bauteilen über eine Erstreckung des oder der Bauteile hinaus zusätzlich eine Hilfsstruktur (2) mit gebildet wird, die zumindest teilweise außerhalb einer vertikal auf eine Bauplattform (5) geworfene Projektionsfläche des oder der Bauteile liegt und die Hilfsstruktur derart gebildet wird, dass sie das Bauteil formschlüssig hält, **dadurch gekennzeichnet, dass** mehrere Lagen von Bauteilen gebildet werden und dass in jeder Lage von Bauteilen eine eigene Hilfsstruktur gebildet wird.

2. Verfahren nach einem der vorhergehenden Ansprüche, wobei die Hilfsstruktur aus einem Rahmen (4) besteht und wobei alle an dem Rahmen angebundenen Bauteile mit ihrem Eigengewicht an ihm halten.

3. Verfahren nach einem der vorhergehenden Ansprüche, wobei die Hilfsstruktur derart mit aufgebaut wird, dass mindestens zwei gleichzeitig aufgebaute Bauteile miteinander verbunden sind.

4. Verfahren nach einem der vorhergehenden Ansprüche, wobei die Hilfsstruktur Materialien des Bauteils aufweist.

5. System umfassend eine Hilfsstruktur (2) für mittels dreidimensionalen Druckverfahren hergestellte Bauteile, sowie ein Bauteil oder Bauteile (1) und eine Bauplattform (5), wobei die Hilfsstruktur mit dem Bauteil aufgebaut ist und sich über eine Dimension des oder der Bauteile hinaus erstreckt und zumindest teilweise außerhalb einer vertikal auf die Bauplattform geworfene Projektionsfläche des oder der Bauteile liegt und die Hilfsstruktur das Bauteil formschlüssig hält, **dadurch gekennzeichnet, dass** mehrere Lagen von Bauteilen vorhanden sind und dass in jeder Lage von Bauteilen eine eigene Hilfsstruktur vorhanden ist.

6. System nach Anspruch 5, wobei die Hilfsstruktur aus einem Rahmen (4) besteht, und wobei sie alle an dem Rahmen angebundenen Bauteile mit ihrem Eigengewicht hält.

7. System nach Anspruch 5 oder 6, wobei die Hilfsstruktur eine Aufnahme bzw. eine Ankoppelvorrichtung bildet.

8. System nach einem der Ansprüche 5 bis 7, wobei die Hilfsstruktur mindestens zwei Bauteile einer Bauteillage verbindet.

9. System nach einem der Ansprüche 5 bis 8, wobei alle aufgebauten Bauteile mit der Hilfsstruktur verbunden sind.

10. System nach einem der Ansprüche 5 bis 9, wobei die Hilfsstruktur ein oder mehrere zu bildende Bauteile im Wesentlichen umrahmt.

11. System nach einem der Ansprüche 5 bis 10, wobei die Hilfsstruktur eine andere Farbe als das Bauteil aufweist.

## Claims

1. A method for producing three-dimensional parts (1) by means of a three-dimensional printing process, wherein an auxiliary structure (2) is additionally formed, during the construction of parts, which extends beyond an extension of the part or parts, said auxiliary structure (2) lying at least partially outside a projection area of the part or parts projected vertically onto a construction platform (5), and the auxiliary structure being formed in such a way that it holds the part in a form-locking manner, **characterised in that** a plurality of layers of parts are formed and **in that** a separate auxiliary structure is formed in each layer of parts.

2. The method according to any one of the preceding claims, wherein the auxiliary structure consists of a frame (4) and wherein all parts attached to the frame are held to it by their own weight.

3. The method according to any one of the preceding claims, wherein the auxiliary structure is simultaneously constructed such that at least two simultaneously constructed parts are connected to each other.

4. The method according to any one of the preceding claims, wherein the auxiliary structure comprises materials of the part.

5. A system comprising an auxiliary structure (2) for parts produced by means of three-dimensional printing processes, as well as a part or parts (1) and a construction platform (5), wherein the auxiliary structure is constructed with the part and extends beyond a dimension of the part or parts and lies at least partially outside a projection area of the part or parts which is projected vertically onto the building platform,
and the auxiliary structure holds the part in a form-locking manner, **characterised in that** a plurality of layers of parts are present and **in that** a separate auxiliary structure is present in each layer of parts.

6. The system according to claim 5, wherein the auxiliary structure consists of a frame (4), and wherein the auxiliary structure holds all the parts attached to the frame by their own weight.

7. The system according to claim 5 or 6, wherein the auxiliary structure forms a receptacle or coupling device.

8. The system according to any one of claims 5 to 7, wherein the auxiliary structure connects at least two parts of a layer of parts.

9. The system according to any one of claims 5 to 8, wherein all constructed parts are connected to the auxiliary structure.

10. The system according to any one of claims 5 to 9, wherein the auxiliary structure substantially frames one or more parts to be formed.

11. The system according to any one of claims 5 to 10, wherein the auxiliary structure has a different colour than the part.

## Revendications

1. Procédé de fabrication de composants tridimensionnels (1) au moyen d'un procédé d'impression tridimensionnelle, une structure auxiliaire (2) étant en outre formée lors d'une construction de composants au-delà d'une extension du ou des composants, ladite structure auxiliaire (2) étant située au moins partiellement en dehors d'une zone de projection du ou des composants projetée verticalement sur une plateforme de construction (5) et la structure auxiliaire étant formée de manière à maintenir le composant par engagement positif, **caractérisé en ce que** plusieurs couches de composants sont formées, une structure auxiliaire distincte étant formée dans chaque couche de composants.

2. Procédé selon l'une quelconque des revendications précédentes, dans lequel la structure auxiliaire est constituée d'un cadre (4) et dans lequel tous les composants fixés sur le cadre y adhèrent par leur propre poids.

3. Procédé selon l'une quelconque des revendications précédentes, dans lequel la structure auxiliaire est construite en même temps de telle sorte qu'au moins deux composants construits simultanément sont reliés entre eux.

4. Procédé selon l'une quelconque des revendications précédentes, dans lequel la structure auxiliaire comprend des matériaux du composant.

5. Système comprenant une structure auxiliaire (2) pour des composants fabriqués au moyen de procédés d'impression tridimensionnelle, ainsi qu'un ou plusieurs composants (1) et une plateforme de construction (5), dans lequel système la structure auxiliaire est réalisée avec le composant et s'étend au-delà d'une dimension du ou des composants et se trouve au moins partiellement en dehors d'une zone de projection du ou des composants qui est projetée verticalement sur la plateforme de construction,
et la structure auxiliaire maintient le composant par engagement positif, **caractérisé en ce que** plusieurs couches de composants sont présentes et **en ce qu'**une structure auxiliaire distincte est présente dans chaque couche de composants.

6. Système selon la revendication 5, dans lequel la structure auxiliaire est constituée d'un cadre (4), et dans lequel elle maintient tous les composants fixés au cadre par leur propre poids.

7. Système selon la revendication 5 ou 6, dans lequel la structure auxiliaire forme un logement ou un dispositif d'accouplement.

8. Système selon l'une quelconque des revendications 5 à 7, dans lequel la structure auxiliaire relie au moins deux composants d'une couche de composants.

9. Système selon l'une quelconque des revendications 5 à 8, dans lequel tous les composants construits sont reliés à la structure auxiliaire.

10. Système selon l'une quelconque des revendications 5 à 9, dans lequel la structure auxiliaire encadre sensiblement un ou plusieurs composants à former.

11. Système selon l'une quelconque des revendications 5 à 10, dans lequel la structure auxiliaire est d'une couleur différente de celle du composant.
